# EUROPEAN PATENT SPECIFICATION

(11) **EP 4 397 722 B1**
(45) Date of publication and mention of the grant of the patent: **24.12.2025**
(21) Application number: 22864551.1
(22) Date of filing: 30.08.2022
(51) Int. Cl.: C08L 95/00, C08K 5/05, C08K 5/16, C08L 67/00, E01C 7/22

(54) **ASPHALT MIXTURE**
ASPHALTMISCHUNG
MÉLANGE D'ASPHALTE

(30) Priority: 30.08.2021 JP 2021140395
(43) Date of publication of application: 10.07.2024
(73) Proprietor: Kao Corporation, Tokyo 103-8210 (JP)
(72) Inventor: AKINO, Yusuke, Wakayama-shi, Wakayama 640-8580 (JP)
(74) Representative: Hoffmann Eitle
(86) International application number: PCT/JP2022/032563
(87) International publication number: WO 2023/032969

(56) References cited:
- JP-A- 2001 002 928
- JP-A- 2004 323 695
- JP-A- 2006 160 915
- JP-A- 2019 508 608
- JP-A- 2020 090 623
- JP-A- 2020 200 459
- JP-A- 2022 105 489
- JP-A- 2022 112 509

## Description

### Field of the Invention

The present invention relates to an asphalt mixture and a method for producing the same, an asphalt modifier, a method for paving a road, and use of an additive in a recycled asphalt mixture.

### Background of the Invention

Asphalt pavement using an asphalt composition has been frequently performed for paving driveways, parking spaces, cargo yards, sidewalks, etc., because of relatively easy construction and a short period of time from beginning of paving works to traffic start.

In such asphalt pavement, a road surface is formed of an asphalt mixture containing aggregates bonded with each other through asphalt, and hence, the paved roads exhibit good hardness and durability.

However, a rut of wheels or a crack is generated on the asphalt-paved surface through long-term use. Therefore, in such a case, repair of the pavement is inevitably needed, which results in increased maintenance costs and significant influence on car traffic.

In addition, asphalt coating on the asphalt pavement surface is striped through long-term use to cause whitening, leading to poor visibility of white lines, which also results in significant influence on car traffic.

WO 2017/125421 (PTL 1) discloses, as an asphalt composition for road pavement superior in dry strength, water immersion strength, and petroleum immersion strength, an asphalt composition for road pavement that contains an asphalt, a specific amount of a polyester resin, and an aggregate, the polyester resin being a polyester having a structural unit derived from an alcohol component containing a specific amount of an alkylene oxide adduct of bisphenol A and a structural unit derived from a carboxylic acid component containing a specific amount of one or more selected from terephthalic acid and isophthalic acid, the polyester resin having a specific softening point and a specific hydroxyl value.

JP 2001-2928 A (PTL 2) discloses, as a method for producing a heating-type pavement material superior in an effect of preventing stripping between bitumen and aggregate, a method characterized by including adding a specific amount of a composition to a bitumen, the composition being obtained by blending a condensate, the condensate being obtained by a reaction of a polyalkylene polyamine having a specific structure and a specific fatty acid, with a modified polyolefin resin having a carboxy group with a specific acid value in a specific ratio.

JP 2001-2928 A (PTL 3) discloses, as a heated asphalt composition that can further enhance the effect of preventing stripping between asphalt and aggregate and does not lose the effect even after heating for a long period of time, an additive for heated asphalt, the additive containing a specific gallic acid amide and the like.

### Summary of the Invention

The present invention relates to the following [1] to [5].
[1] An asphalt mixture containing a polyester resin (A), a compound (B) described below, an asphalt, and an aggregate,
   the aggregate containing an asphalt recycled aggregate:
   the compound (B): a compound having 8 or more carbon atoms and having a hydroxy group or an amino group.
[2] An asphalt modifier containing a polyester resin (A) and a compound (B) described below:
   the compound (B): a compound having 8 or more carbon atoms and having a hydroxy group or an amino group.
[3] A method for producing an asphalt mixture, the method including a step of adding to and mixing with a heated aggregate a mixture of an asphalt, a polyester resin (A), and a compound (B) that are previously mixed with heat.
   the compound (B): a compound having 8 or more carbon atoms and having a hydroxy group or an amino group.
[4] A method for paving a road, the method including a step of laying with compaction the asphalt mixture according to the above [1],
   the compaction of the asphalt mixture being performed at a temperature of 100°C or higher and 200°C or lower.
[5] Use of an additive in a recycled asphalt mixture that contains an asphalt recycled aggregate as an aggregate, the additive containing one or more compounds having 8 or more carbon atoms selected from an alkylamine, an alkyl alcohol, a sugar alcohol, and an alkylamide compound.

### Detailed Description of the Invention

According to the technique described in PTL 1, asphalt pavement which is superior in durability so that a rut of wheels is less likely to be generated can be obtained. However, in laying of the asphalt pavement, after compaction is performed with a compactor and the traffic is opened, the asphalt coating is stripped due to external factors, such as friction involved in repeated running of vehicles, rain water, and exposure to ultraviolet ray, which tends to change the color of the asphalt from the original black to white, resulting in deterioration of the appearance. Such a problem is significant particularly when an asphalt recycled aggregate is used. Not only from the viewpoint of the surface aesthetics in point of the appearance of pavement but also from the viewpoint of the visibility, it is desirable to maintain the black color.

According to the technique described in PTL 2, although the stripping prevention effect is achieved, the durability improvement effect is considered to be poor. When a recycled aggregate in which asphalt and aggregate are fixed is used, a sufficient effect is presumably not achieved.

The technique described in PTL 3 relates specially to the stripping prevention effect but does not have a durability improvement effect.

The present invention relates to an asphalt mixture that can provide asphalt pavement superior in durability and capable of maintaining the black color even after the traffic opening and a method for producing the same, an asphalt modifier, a method for paving a road, and use of an additive in a recycled asphalt mixture that contains an asphalt recycled aggregate as an aggregate.

According to the present invention, it is possible to provide an asphalt mixture that can provide asphalt pavement superior in durability and capable of maintaining the black color even after the traffic opening and a method for producing the same, an asphalt modifier, a method for paving a road, and use of an additive in a recycled asphalt mixture that contains an asphalt recycled aggregate as an aggregate.

The asphalt mixture of the present invention contains an asphalt and an aggregate containing a recycled aggregate, and contains as an asphalt modifier a polyester resin (A) and a compound (B) which is a compound having 8 or more carbon atoms and having a hydroxy group or an amino group. As the asphalt modifier, one kind can be used alone or two or more kinds can be used in combination.

Hereinafter, an asphalt modifier contained in the asphalt mixture and a method for producing the asphalt modifier, an asphalt composition, and a method for producing the asphalt composition, an asphalt mixture and a method for producing the asphalt mixture, a method for paving a road, and use of an additive in a recycled asphalt mixture that contains an asphalt recycled aggregate as an aggregate will be described in this order.

### [Asphalt Modifier]

The asphalt modifier of the present invention contains a polyester resin (A) and a compound (B) described below.

### Compound (B): a compound having 8 or more carbon atoms and having a hydroxy group or an amino group

The present inventors have found that, by incorporating an asphalt modifier that contains a polyester resin (A) and a prescribed compound (B) in combination into an asphalt composition or an asphalt mixture, asphalt pavement that is superior in durability and that is capable of maintaining the black color even after the traffic opening can be obtained.

The amino group as used herein encompasses a primary amino group (-NH₂), a secondary amino group (-NRH), and a tertiary amino group (-NRR'). The amino group also encompasses -NH- and -NR- of an amide bond (-NH-CO-, or, -NR-CO-).

The detailed mechanism for achieving the effects of the present invention is not clear, but partially is considered as follows.

The coating state of aggregate with a binder composition is considered to be improved by the asphalt modifier containing a polyester resin (A) and a specific compound (B) which have a high affinity to each other in combination.

When an asphalt recycled aggregate is used as an aggregate, the asphalt in the asphalt recycled aggregate has been degraded through the thermal history over time, and thus, the asphalt is sometimes not extracted effectively. In the present invention, it is considered that by using a specific compound (B) together which has a high affinity to an asphalt recycled aggregate, even when a recycled aggregate is used as an aggregate, the asphalt in the asphalt recycled aggregate is effectively extracted and a good coating state of the aggregate can be achieved.

Specifically, the mechanism is considered as follows. The carbon atoms of the compound (B) have a high affinity to the asphalt in the asphalt recycled aggregate and the hydroxy groups or the amino groups of the compound (B) have a high affinity to the aggregate surface that is not coated with the asphalt. By the affinities, the compound (B) acts on the interface between the asphalt and the aggregate in the asphalt recycled aggregate to promote stripping of the asphalt in the recycled aggregate from the aggregate and dissolution of the asphalt into a newly blended asphalt, and functions as a binder in cooperation with the polyester resin (A), whereby a good coating state of the aggregate can be achieved. Thus, since the aggregate is strongly kept in the pavement by the good coating state of the aggregate, the durability and the black color of the pavement can be maintained.

As described above, it is considered that, by incorporating the asphalt modifier of the present invention in an asphalt composition or an asphalt mixture, asphalt pavement that is superior in durability and that is capable of maintaining the black color even after the traffic opening can be obtained, in particular, even when an asphalt recycled aggregate is contained.

The definitions and the like of the terms in this description will be described below.

In the polyester resin, "a structural unit derived from an alcohol component" means a structure obtained by removing a hydrogen atom from a hydroxy group of an alcohol component, and "a structural unit derived from a carboxylic acid component" means a structure obtained by removing a hydroxy group from a carboxy group of a carboxylic acid component.

"A carboxylic acid component" is a concept encompassing not only the carboxylic acid but also the anhydride which decomposes in a reaction to produce the acid and alkyl esters of the carboxylic acid (for example, the number of carbon atoms of the alkyl group is 1 or more and 3 or less). When the carboxylic acid component is an alkyl ester of the carboxylic acid, the number of the carbon atoms of the carboxylic acid component does not include the number of carbon atoms of the alkyl group which is the alcohol residue of the easter.

Whether a resin is crystalline or amorphous is determined by a crystalline index. The crystalline index is defined by the ratio of the softening point to the maximum endothermic peak temperature of the resin (softening point (°C) / maximum endothermic peak temperature (°C)). A crystalline resin is a resin having a crystalline index of 0.3 or more and 1.4 or less. An amorphous resin is a resin having no endothermic peak observed, or if a peak is observed, having a crystalline index of less than 0.3 or more than 1.4. The crystalline index can be appropriately adjusted by the types of raw material monomers and the ratio thereof, and the production conditions, such as the reaction temperature, reaction time, and cooling rate.

### [Polyester Resin (A)]

The asphalt modifier of the present invention contains a polyester resin (A).

The polyester resin (A) contains a structural unit derived from an alcohol component and a structural unit derived from a carboxylic acid component.

Examples of the polyester resin (A) include an amorphous polyester resin and a crystalline polyester resin, and an amorphous polyester resin is preferred.

Properties and the like of the alcohol component, the carboxylic acid component, and the polyester resin will be described below.

### <Alcohol Component>

Examples of the alcohol component include an aliphatic diol, an alicyclic diol, an aromatic diol, and a trihydric or higher polyhydric alcohol. One of the alcohol components can be used alone or two or more thereof can be used in combination.

The aliphatic diol is preferably a linear or branched aliphatic diol with a main chain having 2 or more and 12 or less carbon atoms, more preferably a linear or branched aliphatic diol with a main chain having 2 or more and 8 or less carbon atoms.

The aliphatic diol is preferably a saturated aliphatic diol.

Specific examples of the aliphatic diol include ethylene glycol, 1,2-propanediol, 1,3-propanediol, 1,3-butanediol, 1,4-butanediol, 1,4-butenediol, 1,5-pentanediol, 1,6-hexanediol, neopentyl glycol, 1,10-decanediol, and 1,12-dodecanediol.

Examples of the alicyclic diol include hydrogenated bisphenol A (2,2-bis(4-hydroxycyclohexyl)propane), an alkylene oxide adduct of hydrogenated bisphenol A, cyclohexanediol, and cyclohexanedimethanol.

Examples of the aromatic diol include bisphenol A [2,2-bis(4-hydroxyphenyl)propane] and an alkylene oxide adduct of bisphenol A. An example of the alkylene oxide adduct of bisphenol A is an alkylene oxide adduct of bisphenol A represented by the following formula (I). 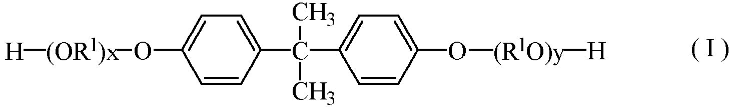 [In the formula, OR¹ and R¹O are an alkylene oxide, R¹ is an alkylene group having 2 or 3 carbon atoms, x and y represent a positive number indicating the average number of moles of the alkylene oxide added, the sum of x and y is preferably 1 or more, more preferably 1.5 or more, and preferably 16 or less, more preferably 8 or less, further preferably 4 or less.]

Examples of the alkylene oxide adduct of bisphenol A represented by the formula (I) include a propylene oxide adduct of bisphenol A and an ethylene oxide adduct of bisphenol A. One of the alkylene oxide adducts of bisphenol A can be used alone or two or more thereof can be used in combination.

The trihydric or higher polyhydric alcohol is preferably a trihydric alcohol. Examples of the trihydric or higher polyhydric alcohol include glycerol, pentaerythritol, trimethylolpropane, and sorbitol.

From the viewpoint of controlling the properties, the alcohol component can further contain a monohydric aliphatic alcohol. Examples of the monohydric aliphatic alcohol include lauryl alcohol, myristyl alcohol, palmityl alcohol, and stearyl alcohol. One of the monohydric aliphatic alcohols can be used alone or two or more thereof can be used in combination.

### <Carboxylic Acid Component>

Examples of the carboxylic acid component include an aliphatic dicarboxylic acid, an aromatic dicarboxylic acid, and a tribasic or higher and hexabasic or lower polybasic carboxylic acid. One of the carboxylic acid components can be used alone or two or more thereof can be used in combination.

Examples of the aliphatic dicarboxylic acid include aliphatic dicarboxylic acids with a main chain having preferably 4 or more, and preferably 10 or less, more preferably 8 or less, more preferably 6 or less carbon atoms, such as a fumaric acid, maleic acid, oxalic acid, malonic acid, citraconic acid, itaconic acid, glutaconic acid, succinic acid, adipic acid, suberic acid, azelaic acid, sebacic acid, dodecanedioic acid, a succinic acid substituted with an alkyl group having 1 or more and 20 or less carbon atoms or an alkenyl group having 2 or more and 20 or less carbon atoms, anhydrides thereof, and alkyl esters thereof (for example, the number of carbon atoms of the alkyl group is 1 or more and 3 or less). Examples of the substituted succinic acid include dodecylsuccinic acid, dodecenylsuccinic acid, and octenylsuccinic acid.

Examples of the aromatic dicarboxylic acid include phthalic acid, terephthalic acid, isophthalic acid, naphthalenedicarboxylic acid, anhydrides thereof, and alkyl esters thereof (for example, the number of carbon atoms of the alkyl group is 1 or more and 3 or less). Among the aromatic dicarboxylic acids, from the viewpoint of durability of the asphalt pavement, isophthalic acid and terephthalic acid are preferred, and terephthalic acid is more preferred.

The tribasic or higher and hexabasic or lower polybasic carboxylic acid is preferably a tribasic carboxylic acid. Examples of the tribasic or higher and hexabasic or lower polybasic carboxylic acids include trimellitic acid, 2,5,7-naphthalenetricarboxylic acid, pyromellitic acid, and acid anhydrides thereof.

From the viewpoint of controlling the properties, the carboxylic acid component can further contain a monobasic aliphatic carboxylic acid. Examples of the monobasic aliphatic carboxylic acid include monobasic aliphatic carboxylic acids having 12 or more and 20 or less carbon atoms, such as lauric acid, myristic acid, palmitic acid, stearic acid, and alkyl (the number of carbon atoms is 1 or more and 3 or less) esters thereof. One of the monobasic aliphatic carboxylic acids can be used alone or two or more thereof can be used in combination.

### <Structural Units Derived from Polyethylene Terephthalate>

The polyester resin (A) can contain an ethylene glycol-derived structural unit and a terephthalic acid-derived structural unit which are derived from polyethylene terephthalate. The polyethylene terephthalate may contain, in addition to the ethylene glycol-derived and terephthalic acid-derived structural units, a small amount of a component, such as butanediol or isophthalic acid. The polyethylene terephthalate is preferably a collected polyethylene terephthalate.

When the polyester resin (A) contains structural units formed from ethylene glycol and terephthalic acid which are derived from polyethylene terephthalate, the "structural unit derived from an alcohol component" contains an ethylene glycol-derived structural unit derived from polyethylene terephthalate, and the "structural unit derived from a carboxylic acid component" contains a terephthalic acid-derived structural unit derived from polyethylene terephthalate.

### <Molar Ratio of Structural Unit Derived from Carboxylic Acid Component to Structural Unit Derived from Alcohol Component>

The molar ratio of the structural unit derived from a carboxylic acid component to the structural unit derived from an alcohol component [carboxylic acid component / alcohol component] is preferably 0.6 or more, more preferably 0.7 or more, further preferably 0.8 or more, and preferably 1.5 or less, more preferably 1.3 or less, further preferably 1.0 or less.

In one of preferred aspects of the present invention, the polyester resin (A) contains a structural unit derived from an alcohol component and a structural unit derived from a carboxylic acid component,
the alcohol component being one or more selected from an aliphatic diol, an alicyclic diol, an aromatic diol, and a trihydric or higher polyhydric alcohol,
the carboxylic acid component being one or more selected from an aliphatic dicarboxylic acid, an aromatic dicarboxylic acid, and a tribasic or higher and hexabasic or lower polybasic carboxylic acid.

### <Properties of Polyester Resin (A)>

The softening point or melting point of the polyester resin (A) is, from the viewpoint of durability of the asphalt pavement, preferably 60°C or higher, more preferably 70°C or higher, further preferably 90°C or higher, further preferably 100°C or higher, and preferably 150°C or lower, more preferably 145°C or lower, further preferably 140°C or lower.

The melting point (the maximum endothermic peak temperature) is generally observed when the polyester resin (A) is a crystalline polyester resin.

The softening point of the polyester resin (A) can be measured by a method described later in the section of Examples. The softening point can be adjusted by the raw material monomer composition, the molecular weight, the amount of catalyst, or reaction conditions.

The polyester resin (A) may be a polyester resin modified to the extent that the characteristics are not substantially impaired. A specific example of the modified polyester resin is a polyester resin obtained by grafting or blocking a polyester resin with phenol, urethane, epoxy, or the like by a method described in JP 11-133668 A, JP 10-239903 A, JP 8-20636 A, or the like. A preferred example of the modified polyester resin is a urethane-modified polyester resin obtained by subjecting a polyester resin to urethane-extension with a polyisocyanate compound.

### <Method for Producing Polyester Resin (A)>

The method for producing the polyester resin (A) which constitutes the asphalt modifier of the present invention is not particularly limited, and, for example, the polyester resin (A) can be produced by polycondensating the alcohol component and the carboxylic acid component described above.

The amounts of the alcohol component and the carboxylic acid blended is amounts so as to provide a molar ratio of the structural unit derived from a carboxylic acid component to the structural unit derived from an alcohol component [carboxylic acid component / alcohol component] within the range as described above.

The temperature of the polycondensation reaction is, from the viewpoint of the reactivity, preferably 160°C or higher, more preferably 180°C or higher, further preferably 190°C or higher, and preferably 260°C or lower, more preferably 250°C or lower, further preferably 240°C or lower.

When the polyester resin used in the present invention contains an ethylene glycol-derived structural unit derived from polyethylene terephthalate and a terephthalic acid-derived structural unit derived from polyethylene terephthalate, the amount of the polyethylene terephthalate present in the raw materials is preferably 5% by mass or more, more preferably 15% by mass or more, further preferably 25% by mass or more, and preferably 80% by mass or less, more preferably 70% by mass or less, further preferably 60% by mass or less in the total amount of the polyethylene terephthalate, the alcohol component, and the carboxylic acid component.

By adding polyethylene terephthalate in the polycondensation reaction of the alcohol component and the carboxylic acid component, a transesterification reaction occurs, and a polyester resin in which structural units of the polyethylene terephthalate are incorporated into the structural unit derived from an alcohol component and the structural unit derived from carboxylic acid component can be obtained.

The polyethylene terephthalate may be present at the beginning of the polycondensation reaction or may be added to the reaction system during the polycondensation reaction. From the viewpoint of durability of the asphalt pavement, the timing of addition of the polyethylene terephthalate is preferably a stage in which the reaction rate of the alcohol component and the carboxylic acid component is 10% or less, and more preferably a stage in which the reaction rate is 5% or less. Note that the reaction rate refers to a value of [amount of reaction water generated (mol) / theoretical amount of water generated (mol) × 100].

From the viewpoint of the reaction rate, an esterification catalyst can be used in the polycondensation reaction. An example of the esterification catalyst is a tin (II) compound having no Sn-C bond, such as tin(II) di(2-ethylhexanoate). The amount of the esterification catalyst used is, from the viewpoint of the reaction rate, relative to 100 parts by mass of the total amount of the alcohol component and the carboxylic acid component, preferably 0.01 parts by mass or more, more preferably 0.1 parts by mass or more, further preferably 0.2 parts by mass or more, and preferably 1.5 parts by mass or less, more preferably 1.0 parts by mass or less, further preferably 0.6 parts by mass or less.

In the polycondensation reaction, in addition to the esterification catalyst, a promoter can be used. An example of the promoter is a pyrogallol compound, such as gallic acid. The amount of the promoter used is, relative to 100 parts by mass of the total amount of the alcohol component and the carboxylic acid component, preferably 0.001 parts by mass or more, more preferably 0.005 parts by mass or more, further preferably 0.01 parts by mass or more, and preferably 0.15 parts by mass or less, more preferably 0.10 parts by mass or less, further preferably 0.05 parts by mass or less.

In the polycondensation reaction, in addition to the catalyst, a polymerization inhibitor, such as t-butyl catechol, may be used in an amount, relative to 100 parts by mass of the total amount of the alcohol component and the carboxylic acid component, of preferably 0.001 parts by mass or more, more preferably 0.01 parts by mass or more, and preferably 0.5 parts by mass or less, more preferably 0.2 parts by mass or less, further preferably 0.1 parts by mass or less.

### <Compound (B)>

From the viewpoint of capability of maintaining black color of the asphalt pavement, the asphalt composition of the present invention contains one or more compounds (B) having 8 or more carbon atoms, the compounds (B) each being a compound having 8 or more carbon atoms and having a hydroxy group or an amino group, preferably selected from an alkylamine, an alkyl alcohol, a sugar alcohol, and an alkyl amide. As the compound (B), one compound can be used alone or two or more compounds can be used in combination.

The compound (B) has 8 or more, preferably 10 or more, more preferably 12 or more, and preferably 30 or less, more preferably 25 or less, further preferably 20 or less carbon atoms.

From the viewpoint of affinity to the asphalt in the asphalt recycled aggregate, the compound (B) preferably has an alkyl group or an alkenyl group having 8 or more carbon atoms, more preferably has an alkyl group having 8 or more carbon atoms, and further preferably has a linear alkyl group having 8 or more carbon atoms. The number of carbon atoms of the alkyl group or alkenyl group is more preferably 10 or more, further preferably 12 or more, and preferably 30 or less, more preferably 25 or less, further preferably 20 or less.

### [Alkylamine Having 8 or More Carbon Atoms]

The alkylamine having 8 or more carbon atoms has one or more amino groups and alkyl groups, the structure is not limited as long as the total number of carbon atoms is 8 or more.

The number of amino groups of the alkylamine is not particularly limited, and, from the viewpoint of capability of maintaining black color of the asphalt pavement, is preferably one or more and three or less, more preferably one or two, further preferably one.

The amino group of the alkylamine may be any of a primary amino group, a secondary amino group, and a tertiary amino group, and from the viewpoint of capability of maintaining black color of the asphalt pavement, is preferably a primary amino group or a secondary amino group, more preferably a primary amino group.

When the alkylamine has two amino groups, for example, the alkylamine has one primary amino group and one secondary amino group in the molecule.

Specific examples of the alkylamine include,
primary amines, such as octylamine, decylamine, laurylamine, myristylamine, palmitylamine, stearylamine, oleylamine, coconut amine, soya amine, tallow amine, and hydrogenated tallow amine;
secondary amines, such as dibutylamine, dioctylamine, didecylamine, dilaurylamine, dimyristylamine, dipalmitylamine, distearylamine, dioleylamine, dicoconut amine, disoya amine, ditallow amine, and di(hydrogenated tallow) amine;
tertiary amines, such as dimethyloctylamine, dimethyldecylamine, dimethyllaurylamine, dimethylmyristylamine, dimethylpalmitylamine, dimethylstearylamine, dimethyloleylamine, dimethylcoconut amine, dimethylsoya amine, dimethyltallow amine, and dimethyl(hydrogenated tallow) amine;
diamines, such as octylpropylenediamine, decylpropylenediamine, laurylpropylenediamine, myristylpropylenediamine, palmitylpropylenediamine, stearylpropylenediamine, oleylpropylenediamine, coconut propylenediamine, soya propylenediamine, tallow propylenediamine, and (hydrogenated tallow) propylenediamine; and
a triamine, such as tallow dipropylenetriamine. One of the alkylamines can be used alone or two or more thereof can be used in combination.

The alkylamine is preferably tallow amine, tallow triamine, and dimethyldecylamine, more preferably tallow amine.

Coconut amine, soya amine, tallow amine, hydrogenated tallow amine, dicoconut amine, disoya amine, ditallow amine, di(hydrogenated tallow) amine, dimethylcoconut amine, dimethylsoya amine, dimethyltallow amine, dimethyl(hydrogenated tallow) amine, coconut propylenediamine, soya propylenediamine, tallow propylenediamine, (hydrogenated tallow) propylenediamine, and tallow dipropylenetriamine are a mixed amine which contains two or more alkylamines.

Examples of commercially available alkylamines include "DANOX A-P", "ASFIER N480L", "FARMIN 86T", "FARMIN D86", "FARMIN DM20", "TRIAMINE T", "TRIAMINE R-86" (all are trade names, manufactured by KAO CORPORATION), "ARMEEN 16D", "ARMEEN 2C", and "ARMEEN DMSD" (all are trade names, manufactured by Lion Corporation).

### [Alkyl Alcohol Having 8 or More Carbon Atoms]

The structure of the alkyl alcohol having 8 or more carbon atoms is not limited as long as it has one or more hydroxy groups and alkyl groups and the total number of the carbon atoms is 8 or more.

The number of hydroxy groups of the alkyl alcohol is not particularly limited, and, from the viewpoint of capability of maintaining black color of the asphalt pavement, is preferably one or more and three or less, more preferably one or two, further preferably one.

The hydroxy group of the alkyl alcohol may be any of a primary hydroxy group, a secondary hydroxy group, and a tertiary hydroxy group, and, from the viewpoint of capability of maintaining black color of the asphalt pavement, is preferably a primary hydroxy group or a secondary hydroxy group, more preferably a primary hydroxy group.

Specific examples of the alkyl alcohol include octyl alcohol, decyl alcohol, lauryl alcohol, myristyl alcohol, cetyl alcohol, and stearyl alcohol. One of the alkylamines can be used alone or two or more thereof can be used in combination.

The alkyl alcohol is preferably lauryl alcohol.

Examples of commercially available alkyl alcohols include "KALCOL 8098" and "KALCOL 2098" containing one alkyl alcohol (all are trade names, manufactured by KAO CORPORATION), "KALCOL 8650, "KALCOL 4250", "RHEODOL SP-S30V", and "RHEODOL SP-O30V" containing two or more alkyl alcohols (all are trade names, manufactured by KAO CORPORATION).

### [Sugar Alcohol Having 8 or More Carbon Atoms]

The structure of the sugar alcohol having 8 or more carbon atoms is not limited as long as it has one or more hydroxy groups and a sugar alcohol backbone moiety and the total number of carbon atoms is 8 or more. An ester of a sugar alcohol and a fatty acid is preferred.

Examples of the backbone moiety of the sugar alcohol include glycerol, sorbitol, and sorbitan. Examples of the fatty acid constituting the ester include oleic acid, palmitic acid, and stearic acid.

The number of hydroxy groups of the sugar alcohol is not particularly limited, and, from the viewpoint of capability of maintaining black color of the asphalt pavement, is preferably one or more and three or less, more preferably one or two, further preferably one.

The hydroxy group of the sugar alcohol may be any of a primary hydroxy group, a secondary hydroxy group, and a tertiary hydroxy group, and, from the viewpoint of capability of maintaining black color of the asphalt pavement, is preferably a primary hydroxy group or a secondary hydroxy group, more preferably a primary hydroxy group.

Specific examples of the sugar alcohol include sugar alcohols having two hydroxy groups, such as glycerol monostearate, glycerol monooleate, sorbitan distearate, and sorbitan dioleate; and sugar alcohols having three hydroxy groups, such as sorbitan monolaurate, sorbitan monopalmitate, and sorbitan monostearate. One of the sugar alcohols can be used alone or two or more thereof can be used in combination.

The sugar alcohol is preferably a sorbitan monostearate.

Examples of commercially available sugar alcohols include "RHEODOL MS-50", "RHEODOL MO-60", "RHEODOL SP-S20", "RHEODOL SP-L10", and "RHEODOL SP-S10V" (all are trade names, manufactured by KAO CORPORATION).

### [Alkylamide Having 8 or More Carbon Atoms]

The structure of the alkylamide having 8 or more carbon atoms is not limited as long as it has an amide group and an alkyl group and the total number of carbon atoms is 8 or more. The alkylamide encompasses an alkylalkanolamide.

Specific examples of the alkylamide include ethylene bisstearic acid amide, stearic acid amide, and oleic acid amide. Specific examples of the alkylalkanolamide include stearylethanolamide and laurylethanolamide. One of the alkylamides can be used alone or two or more thereof can be used in combination.

The alkylamide is preferably ethylene bisstearic acid amide.

Examples of commercially available alkylamides include "KAOWAX EB-G", "FATTY ACID AMIDE T", "FATTY ACID AMIDE S", "AMINON L-02", and "AMINON PK-02S" (all are trade names, manufactured by KAO CORPORATION).

As the compound (B), among them, an alkylamine, an alkyl alcohol, and a sugar alcohol are preferred, and an alkylamine is more preferred.

### <Contents of Polyester Resin (A) and Compound (B)>

In the asphalt modifier, the mass ratio of the polyester resin (A) to the compound (B) [polyester resin (A) / compound (B)] is, from the viewpoints of durability of the asphalt pavement and capability of maintaining black color of the asphalt pavement, preferably 4 or more, more preferably 5 or more, further preferably 6 or more, and preferably 39 or less, more preferably 30 or less, further preferably 25 or less.

The asphalt modifier of the present invention may contain a component other than the polyester resin (A) and the compound (B) to the extent that the effects are not impaired, or may be constituted only of the polyester resin (A) and the compound (B).

The total content of the polyester resin (A) and the compound (B) in the asphalt modifier is preferably 50% by mass or more, more preferably 70% by mass or more, further preferably 85% by mass or more in the total mass of the asphalt modifier.

The asphalt modifier of the present invention can be used, for example, for obtaining an asphalt composition by being mixed with an asphalt. A heated aggregate is added to the resulting asphalt composition to form an asphalt mixture, which can then be used for pavement. The asphalt modifier of the present invention can be suitably used as an asphalt modifier that is to be blended into an asphalt mixture that contains an aggregate.

### [Asphalt Composition]

The asphalt composition of the present invention contains the polyester resin (A), the compound (B), and an asphalt.

### <Asphalt>

As the asphalt, various asphalts can be used. Examples thereof include straight asphalt which is a petroleum asphalt for pavement and a modified asphalt. Examples of the modified asphalt include a blown asphalt; and a polymer-modified asphalt modified with a polymer material, such as a thermoplastic elastomer or a thermoplastic resin. The straight asphalt refers to a residual bituminous material obtained by treating a crude oil in an atmospheric distillation apparatus, a vacuum distillation apparatus, or the like. The blown asphalt means an asphalt obtained by heating a mixture of a straight asphalt and a heavy oil and then, blowing air thereinto to cause oxidation. The asphalt is preferably selected from a straight asphalt and a polymer-modified asphalt. From the viewpoint of durability of the asphalt pavement, a polymer-modified asphalt is more preferred, and from the viewpoint of versatility, a straight asphalt is more preferred. As the polymer-modified asphalt, an asphalt modified with a thermoplastic elastomer is more preferred.

### (Thermoplastic Elastomer)

Examples of the thermoplastic elastomer in the thermoplastic elastomer-modified asphalt include at least one selected from a styrene/butadiene block copolymer, a styrene/butadiene/styrene block copolymer, a styrene/butadiene random copolymer, a styrene/isoprene block copolymer, a styrene/isoprene/styrene block copolymer, a styrene/isoprene random copolymer, an ethylene/vinyl acetate copolymer, an ethylene/acrylate ester copolymer, a styrene/ethylene/butylene/styrene copolymer, a styrene/ethylene/propylene/styrene copolymer, a polyurethane-based thermoplastic elastomer, a polyolefin-based thermoplastic elastomer, an isobutylene/isoprene copolymer, a polyisoprene, a polychloroprene, a synthetic rubber other than the above, and a natural rubber.

Among them, the thermoplastic elastomer is, from the viewpoint of durability of the asphalt pavement, preferably at least one selected from a styrene/butadiene block copolymer, a styrene/butadiene/styrene block copolymer, a styrene/butadiene random copolymer, a styrene/isoprene block copolymer, a styrene/isoprene/styrene block copolymer, a styrene/isoprene random copolymer, and an ethylene/acrylate ester copolymer, more preferably at least one selected from a styrene/butadiene block copolymer, a styrene/butadiene/styrene block copolymer, a styrene/butadiene random copolymer, a styrene/isoprene block copolymer, and a styrene/isoprene random copolymer, further preferably at least one selected from a styrene/butadiene random copolymer and a styrene/butadiene/styrene block copolymer.

The content of the thermoplastic elastomer in the polymer-modified asphalt is, from the viewpoint of durability of the asphalt pavement, preferably 0.1% by mass or more, more preferably 0.5% by mass or more, further preferably 1% by mass or more, and preferably 30% by mass or less, more preferably 15% by mass or less, further preferably 5% by mass or less.

### <Content of Polyester Resin (A) and Compound (B)>

In the asphalt composition of the present invention, the total content of the polyester resin (A) and the compound (B) is, from the viewpoints of durability of the asphalt pavement and capability of maintaining black color of the asphalt pavement, relative to 100 parts by mass of the asphalt, preferably 1 part by mass or more, more preferably 3 parts by mass or more, further preferably 5 parts by mass or more, and preferably 30 parts by mass or less, more preferably 25 parts by mass or less, further preferably 20 parts by mass or less.

The asphalt composition of the present invention is a binder composition, and, for example, an aggregate is added to the asphalt composition to form an asphalt mixture, which can be used for pavement. In other words, the asphalt composition of the present invention is suitable for pavement, and particularly suitable for paving a road.

### [Method for producing Asphalt Composition]

The method for producing the asphalt composition of the present invention preferably includes a step of mixing an asphalt, the polyester resin (A), and the compound (B).

The asphalt composition is obtained by melting an asphalt with heat, adding the polyester resin (A) and the compound (B) thereto, and mixing the mixture by stirring with a generally used mixer until the components are uniformly dispersed. Examples of the generally used mixer include a homomixer, a dissolver, a paddle mixer, a ribbon mixer, a screw mixer, a planetary mixer, a vacuum reverse-flow mixer, a roll mill, and a twin-screw extruder.

The temperature in mixing the asphalt with the polyester resin (A) and the compound (B) is, from the viewpoint of uniformly dispersing the polyester resin (A) and the compound (B) in the asphalt, preferably 100°C or higher, more preferably 130°C or higher, further preferably 160°C or higher, furthermore preferably 170°C or higher, and preferably 230°C or lower, more preferably 210°C or lower, further preferably 200°C or lower, furthermore preferably 190°C or lower.

The time of mixing the asphalt with the polyester resin (A) and the compound (B) is, from the viewpoint of effectively uniformly dispersing the polyester resin (A) and the compound (B) in the asphalt, preferably 0.1 hours or more, more preferably 0.5 hours or more, further preferably 1.0 hours or more, furthermore preferably 1.5 hours or more, and preferably 10 hours or less, more preferably 7 hours or less, further preferably 5 hours or less, furthermore preferably 3 hours or less.

### [Asphalt Mixture]

The asphalt mixture of the present invention contains the polyester resin (A), the compound (B), an asphalt, and an aggregate, the aggregate containing an asphalt recycled aggregate.

The total content of the polyester resin (A) and the compound (B) in the asphalt mixture is preferably 0.01% by mass or more, more preferably 0.05% by mass or more, further preferably 0.10% by mass or more, further preferably 0.15% by mass or more, and preferably 4% by mass or less, more preferably 3% by mass or less, further preferably 2% by mass or less, further preferably 1% by mass or less.

The content of the asphalt in the asphalt mixture is preferably 2.5% by mass or more, more preferably 3% by mass or more, further preferably 3.5% by mass or more, further preferably 4% by mass or more, and preferably 10% by mass or less, more preferably 9% by mass or less, further preferably 8% by mass or less, further preferably 7% by mass or less.

In the asphalt mixture of the present invention, the total content of the polyester resin (A) and the compound (B) is, from the viewpoints of durability of the asphalt pavement and capability of maintaining black color of the asphalt pavement, relative to 100 parts by mass of the asphalt, preferably 1 part by mass or more, more preferably 3 parts by mass or more, further preferably 5 parts by mass or more, and preferably 30 parts by mass or less, more preferably 25 parts by mass or less, further preferably 20 parts by mass or less.

The content of the asphalt in the asphalt mixture is the total content of a new asphalt and an asphalt derived from the asphalt recycled aggregate.

The content of the asphalt in the asphalt mixture can be determined from the blended amount. The content can also be determined by an ignition loss measurement using the asphalt mixture or an asphalt pavement body. The ignition loss measurement is performed according to a method defined in American Association of State Highway and Transportation Officials (AASHTO) T 308-10 (2015). Since a recycled aggregate as described later is contained as an aggregate, the amount of the asphalt that is obtained from the ignition loss of the asphalt recycled aggregate is used for the blending calculation.

### <Aggregate>

The aggregate contains an asphalt recycled aggregate as an essential component, and furthermore, for example, any selected from crushed stones, cobble stones, gravel, sand, ceramic, and the like can be used.

As the aggregate, any of a coarse aggregate having a particle diameter of 2.36 mm or more and a fine aggregate having a particle diameter of less than 2.36 mm can be used.

Examples of the coarse aggregate include crushed stones having a particle diameter range of 2.36 mm or more and less than 4.75 mm, crushed stones having a particle diameter range of 4.75 mm or more and less than 12.5 mm, crushed stones having a particle diameter range of 12.5 mm or more and less than 19 mm, and crushed stones having a particle diameter range of 19 mm or more and less than 31.5 mm.

The fine aggregate is preferably a fine aggregate having a particle diameter of 0.075 mm or more and less than 2.36 mm. Examples of the fine aggregate include river sand, hill sand, mountain sand, sea sand, crushed sand, fine sand, screenings, crushed stone dust, silica sand, artificial sand, glass cullet, molding sand, and recycled aggregate-crushed sand.

The aforementioned particle diameters are values prescribed in JIS 5001: 2008.

Among them, a combination of the coarse aggregate and the fine aggregate is preferred.

The fine aggregate may contain a filler having a particle diameter of less than 0.075 mm. Examples of the filler include sand, fly ash, calcium carbonate powder, such as limestone powder, and hydrated lime. Among them, from the viewpoint of enhancing strength of the asphalt pavement, calcium carbonate powder is preferred.

From the viewpoint of enhancing the strength of the asphalt pavement, the average particle diameter of the filler is preferably 0.001 mm or more, and preferably 0.05 mm or less, more preferably 0.03 mm or less, further preferably 0.02 mm or less.

Here, the average particle diameter means an average particle diameter of 50% cumulative volume (D50), and can be measured by a laser diffraction particle size distribution analyzer.

The mass ratio of the coarse aggregate and the fine aggregate is, from the viewpoint of durability of the asphalt pavement, preferably 10/90 or more, more preferably 15/85 or more, further preferably 20/80 or more, and preferably 90/10 or less, more preferably 80/20 or less, further preferably 70/30 or less.

The aggregate contains an asphalt recycled aggregate.

The asphalt recycled aggregate is obtained by collecting, crushing, and classifying a used asphalt pavement body.

A used asphalt pavement body from which the asphalt recycled aggregate is derived contains an asphalt and an aggregate, and can contain another additive as needed.

The asphalt contained in the asphalt recycled aggregate has physical and chemical properties degraded due to the influence of environmental factors, such as heat and light. The physical and chemical properties of an asphalt can be evaluated by measuring the penetration, the softening point, the bending strength, the strain at break, the asphalt composition of the asphalt. In general, an asphalt resulting from conversion of the maltene fraction in the asphalt to asphaltene and thus having a reduced penetration is often referred to as a degraded asphalt. However, even if the penetration of a recycled asphalt is equal to the penetration of a new asphalt, the recycled asphalt sometimes cannot provide a performance equal to that of the new asphalt due to other properties changed.

The content of the aggregate in the asphalt mixture is preferably 90% by mass or more, more preferably 92% by mass or more, further preferably 93% by mass or more, and preferably 98% by mass or less, more preferably 97% by mass or less, further preferably 96% by mass or less.

The content of the asphalt recycled aggregate in the asphalt mixture is, from the viewpoints of reducing the environmental load and reducing the production cost, preferably 10% by mass or more, more preferably 15% by mass or more, further preferably 20% by mass or more, and from the viewpoint of ensuring the quality stability and workability, preferably 80% by mass or less, more preferably 70% by mass or less, further preferably 60% by mass or less.

Suitable examples of blending in the asphalt mixture include the following (1) to (3).
(1) A fine-graded asphalt which contains 30% by volume or more and less than 45% by volume of the coarse aggregate, 30% by volume or more and 50% by volume or less of the fine aggregate, and 5% by volume or more and 10% by volume or less of the asphalt composition.
(2) An example of the asphalt mixture is a dense-graded asphalt which contains, for example, 45% by volume or more and less than 70% by volume of the coarse aggregate, 20% by volume or more and 45% by volume or less of the fine aggregate, and 3% by volume or more and 10% by volume or less of the asphalt composition.
(3) A porous asphalt which contains 70% by volume or more and 80% by volume or less of the coarse aggregate, 10% by volume or more and 20% by volume or less of the fine aggregate, and 3% by volume or more and 10% by volume or less of the asphalt composition.

In a conventional asphalt mixture containing an aggregate and an asphalt, a blending proportion of the asphalt is generally adopted according to an optimum asphalt amount obtained from "Formulation and Design of Asphalt Composition" as described in "Guideline for Pavement Design and Construction" published by Japan Road Association.

In the present invention, the aforementioned optimum asphalt amount corresponds to the total amount of the asphalt and the asphalt modifier. However, the method of determining the amount is not to be limited to the method as described in "Guideline for Pavement Design and Construction", and the amount may also be determined by any other methods.

### [Method for Producing Asphalt Mixture]

The asphalt mixture of the present invention can be obtained, for example, by a production method including a step of adding to and mixing with a heated aggregate a mixture of an asphalt, the polyester resin (A), and the compound (B) that are previously mixed with heat.

Specific examples of the method for producing the asphalt mixture include conventional methods of producing an asphalt mixture called a plant mix method, a premix method, and the like. The methods are all a method in which an asphalt (and a thermoplastic elastomer as needed), the polyester resin (A), and the compound (B) are added to a heated aggregate. Examples of the addition method include a premix method in which an asphalt (and a thermoplastic elastomer as needed), the polyester resin (A), and the compound (B) are previously dissolved; and a plant mix method in which a modified asphalt having a thermoplastic elastomer dissolved in an asphalt is added to an aggregate, and then, the polyester resin (A) and the compound (B) are put therein. Among them, the premix method is preferred from the viewpoint of exhibiting the asphalt performance.

More specifically, in the mixing step of the method for producing the asphalt mixture, preferably
(i) an asphalt (and a thermoplastic elastomer as needed) is/are added to and mixed with a heated aggregate to obtain a mixture, and then, the polyester resin (A) and the compound (B) are added thereto, and the mixture and the polyester resin are mixed;
(ii) an asphalt (and a thermoplastic elastomer as needed), the polyester resin (A), and the compound (B) are simultaneously added to and mixed with a heated aggregate; or
(iii) a mixture of an asphalt (and a thermoplastic elastomer as needed), the polyester resin (A), and the compound (B) that are previously mixed with heat is added to and mixed with a heated aggregate.

Among them, the method of (iii) is preferred from the viewpoint of exhibiting the asphalt performance.

The temperature in mixing an asphalt, the polyester resin (A), and the compound (B) into a heated aggregate is, from the viewpoint of softening the asphalt to exhibit the asphalt performance, preferably 130°C or higher, more preferably 140°C or higher, and preferably 200°C or lower, more preferably 190°C or lower, further preferably 180°C or lower.

The time of mixing an asphalt, the polyester resin (A), and the compound (B) into a heated aggregate is, from the viewpoint of exhibiting the asphalt performance, preferably 30 seconds or more, more preferably 1 minute or more, further preferably 2 minutes or more, further preferably 5 minutes or more, and the upper limit of the time is not particularly limited, but, for example, is about 30 minutes.

In the method of (iii), the method for preparing the mixture of an asphalt (and a thermoplastic elastomer as needed), the polyester resin (A), and the compound (B) previously mixed with heat is not particularly limited, but preferably, the method includes a step of melting an asphalt with heat, adding the polyester resin (A), the compound (B), and another additive as needed thereto, and mixing the resulting mixture with stirring with a generally used mixer until the components are uniformly dispersed. Examples of the generally used mixer include a homomixer, a dissolver, a paddle mixer, a ribbon mixer, a screw mixer, a planetary mixer, a vacuum reverse-flow mixer, a roll mill, and a twin-screw extruder.

The temperature in mixing the asphalt, the polyester resin (A), and the compound (B) is, from the viewpoint of uniformly dispersing the polyester resin in the asphalt to exhibit the asphalt performance, preferably 100°C or higher, more preferably 130°C or higher, further preferably 160°C or higher, further preferably 170°C or higher, and preferably 230°C or lower, more preferably 210°C or lower, further preferably 200°C or lower, further preferably 190°C or lower.

The time of mixing the asphalt, the polyester resin (A), and the compound (B) is, from the viewpoint of effectively uniformly dispersing the polyester resin (A) and the compound (B) in the asphalt to exhibit the asphalt performance, preferably 0.1 hours or more, more preferably 0.5 hours or more, further preferably 1.0 hour or more, further preferably 1.5 hours or more, and preferably 10 hours or less, more preferably 7 hours or less, further preferably 5 hours or less, further preferably 3 hours or less.

A preferred content of the polyester resin (A) and the compound (B) relative to the asphalt is as described above.

In the method of (iii), the mixture of the asphalt, the polyester resin (A), and the compound (B) may be used as a heated asphalt mixture which contains substantially no water. Alternatively, the mixture may be used as a cold asphalt mixture by blending an emulsifier and water into the asphalt mixture to form an asphalt emulsion and blending an aggregate and the like therewith. From the viewpoint of exhibiting the asphalt performance, the mixture of the asphalt and the polyester resin preferably contains substantially no water.

The method for producing the asphalt mixture in the case of using the asphalt mixture as a heated asphalt mixture is not particularly limited, and any method may be used to produce the asphalt mixture, but, in general, the method may be based on a method for producing an asphalt mixture that contains an aggregate and an asphalt composition.

### [Method for Laying Road Pavement]

The asphalt mixture of the present invention is suitable for road pavement. The method for laying road pavement of the present invention preferably includes laying the asphalt mixture of the present invention on a road or the like to form an asphalt pavement material layer. With the asphalt mixture of the present invention, the formed asphalt pavement material is superior in suppression of aggregate scattering and in water resistance, and thus, the asphalt mixture can be suitably used in drainage pavement.

In addition, the method for laying road pavement of the present invention preferably includes a step of laying the asphalt mixture of the present invention on a surface course of a road. In particular, it is preferred that the asphalt mixture of the present invention is laid on a surface course of a freeway road.

In the road pavement method, the asphalt mixture may be laid with compaction with the same laying machine and by the same method as for a general asphalt mixture. In the case of using the asphalt mixture as a heated asphalt mixture, from the viewpoint of exhibiting the asphalt performance, the temperature in compaction of the asphalt mixture is preferably 100°C or higher, more preferably 120°C or higher, further preferably 130°C or higher, and preferably 200°C or lower, more preferably 180°C or lower, further preferably 170°C or lower.

In other words, one of preferred aspects of the road pavement method of the present invention is a road pavement method including a step of laying the asphalt mixture with compaction, the temperature in compaction of the asphalt mixture being 100°C or higher and 200°C or lower.

### [Use in Recycled Asphalt Mixture Containing Asphalt Recycled Aggregate as Aggregate]

### [Additive for Recycled Asphalt Mixture]

As shown later in the section of Examples, the compound (B) even solely exhibits the effect of maintaining the black color in the asphalt pavement even after the traffic opening. Accordingly, the present invention also provides use of an additive in a recycled asphalt mixture that contains an asphalt recycled aggregate as an aggregate, the additive containing a compound having 8 or more carbon atoms and having a hydroxy group or an amino group, preferably one or more compounds having 8 or more carbon atoms selected from an alkylamine, an alkyl alcohol, a sugar alcohol, and an alkylamide compound.

In addition, the present invention provides an additive for a recycled asphalt mixture, the additive containing a compound having 8 or more carbon atoms and having a hydroxy group or an amino group, preferably one or more compounds having 8 or more carbon atoms selected from an alkylamine, an alkyl alcohol, a sugar alcohol, and an alkylamide compound.

The amount of the compound (B) used is, from the viewpoint of capability of maintaining black color of the asphalt pavement, relative to 100 parts by mass of the asphalt, preferably 0.3 parts by mass or more, more preferably 0.5 parts by mass or more, further preferably 1.0 parts by mass or more, and preferably 5.0 parts by mass or less, more preferably 3.0 parts by mass or less, further preferably 2.0 parts by mass or less.

The additive of the present invention is used as an additive in producing a recycled asphalt mixture which contains an asphalt recycled aggregate as an aggregate.

With respect to the embodiments described above, the present invention further discloses the following embodiments.
<1> An asphalt mixture containing a polyester resin (A), a compound (B) described below, an asphalt, and an aggregate,
   the aggregate containing an asphalt recycled aggregate:
   the compound (B): a compound having 8 or more carbon atoms and having a hydroxy group or an amino group.
<2> The asphalt mixture according to the above <1>, wherein the compound (B) has 30 or less carbon atoms, preferably 10 or more, more preferably 12 or more, and preferably 25 or less, more preferably 20 or less carbon atoms.
<3> The asphalt mixture according to the above <1> or <2>, wherein the compound (B) is one or more compounds selected from an alkylamine, an alkyl alcohol, a sugar alcohol, and an alkylamide compound.
<4> The asphalt mixture according to any one of the above <1> to <3>, wherein the alkylamine contains one or more selected from the group consisting of
   a primary amine selected from the group consisting of octylamine, decylamine, laurylamine, myristylamine, palmitylamine, stearylamine, oleylamine, coconut amine, soya amine, tallow amine, and hydrogenated tallow amine;
   a secondary amine selected from the group consisting of dibutylamine, dioctylamine, didecylamine, dilaurylamine, dimyristylamine, dipalmitylamine, distearylamine, dioleylamine, dicoconut amine, disoya amine, ditallow amine, and di(hydrogenated tallow) amine;
   a tertiary amine selected from the group consisting of dimethyloctylamine, dimethyldecylamine, dimethyllaurylamine, dimethylmyristylamine, dimethylpalmitylamine, dimethylstearylamine, dimethyloleylamine, dimethylcoconut amine, dimethylsoya amine, dimethyltallow amine, and dimethyl(hydrogenated tallow) amine;
   one or more diamines selected from the group consisting of octylpropylenediamine, decylpropylenediamine, laurylpropylenediamine, myristylpropylenediamine, palmitylpropylenediamine, stearylpropylenediamine, oleylpropylenediamine, coconut propylenediamine, soya propylenediamine, tallow propylenediamine, and hydrogenated tallow propylenediamine; and
   one or more triamines selected from tallow dipropylenetriamine,
   preferably one or more selected from the group consisting of tallow amine, tallow triamine, and dimethyldecylamine, more preferably tallow amine.
<5> The asphalt mixture according to any one of the above <1> to <3>, wherein the alkyl alcohol contains
   one or more selected from the group consisting of octyl alcohol, decyl alcohol, lauryl alcohol, myristyl alcohol, cetyl alcohol, and stearyl alcohol,
   preferably lauryl alcohol.
<6> The asphalt mixture according to any one of the above <1> to <3>, wherein the sugar alcohol contains one or more selected from the group consisting of
   one or more sugar alcohols having two hydroxy groups selected from the group consisting of glycerol monostearate, glycerol monooleate, sorbitan distearate, and sorbitan dioleate; and one or more sugar alcohols having three hydroxy groups selected from the group consisting of sorbitan monolaurate, sorbitan monopalmitate, and sorbitan monostearate,
   preferably sorbitan monostearate.
<7> The asphalt mixture according to any one of the above <1> to <3>, wherein the alkylamide contains one or more selected from the group consisting of
   one or more alkylamides selected from the group consisting of ethylene bisstearic acid amide, stearic acid amide, and oleic acid amide; and one or more alkylalkanolamides selected from the group consisting of stearylethanolamide and laurylethanolamide,
   preferably ethylene bisstearic acid amide.
<8> The asphalt mixture according to any one of the above <1> to <7>, wherein a mass ratio of the polyester resin (A) to the compound (B) [polyester resin (A) / compound (B)] is 4 or more and 39 or less, preferably 5 or more, more preferably 6 or more, and preferably 30 or less, more preferably 25 or less.
<9> The asphalt mixture according to any one of the above <1> to <4>, wherein the compound (B) is an alkylamine,
   the mass ratio of the polyester resin (A) to the alkylamine [polyester resin (A) / alkylamine] being 4 or more and 39 or less, preferably 5 or more, more preferably 6 or more, and preferably 30 or less, more preferably 25 or less.
<10> The asphalt mixture according to any one of the above <1> to <3> and <5>, wherein the compound (B) is an alkyl alcohol,
   the mass ratio of the polyester resin (A) to the alkyl alcohol [polyester resin (A) / alkyl alcohol] being 4 or more and 39 or less, preferably 5 or more, more preferably 6 or more, and preferably 30 or less, more preferably 25 or less.
<11> The asphalt mixture according to any one of the above <1> to <3> and <6>, wherein the compound (B) is a sugar alcohol,
   the mass ratio of the polyester resin (A) to the sugar alcohol [polyester resin (A) / sugar alcohol] being 4 or more and 39 or less, preferably 5 or more, more preferably 6 or more, and preferably 30 or less, more preferably 25 or less.
<12> The asphalt mixture according to any one of the above <1> to <3> and <7>, wherein the compound (B) is an alkylamide compound,
   the mass ratio of the polyester resin (A) to the alkylamide compound [polyester resin (A) / alkylamide compound] being 4 or more and 39 or less, preferably 5 or more, more preferably 6 or more, and preferably 30 or less, more preferably 25 or less.
<13> The asphalt mixture according to any one of the above <1> to <12>, wherein the asphalt mixture contains the aggregate in an amount of 90% by mass or more and 98% by mass or less, preferably 92% by mass or more, more preferably 93% by mass or more, and preferably 97% by mass or less, more preferably 96% by mass or less.
<14> The asphalt mixture according to any one of the above <1> to <13>, wherein the asphalt mixture contains the asphalt recycled aggregate in an amount of 10% by mass or more and 80% by mass or less, preferably 15% by mass or more, more preferably 20% by mass or more, and preferably 70% by mass or less, more preferably 60% by mass or less.
<15> The asphalt mixture according to any one of the above <1> to <14>, wherein the asphalt mixture contains the polyester resin (A) and the compound (B) in a total amount of 0.01% by mass or more and 4% by mass or less, preferably 0.05% by mass or more, more preferably 0.10% by mass or more, further preferably 0.15% by mass or more, and preferably 3% by mass or less, more preferably 2% by mass or less, further preferably 1% by mass or less.
<16> The asphalt mixture according to any one of the above <1> to <15>, wherein the asphalt is contained in an amount of 2.5% by mass or more and 10% by mass or less, preferably 3% by mass or more, more preferably 3.5% by mass or more, further preferably 4% by mass or more, and preferably 9% by mass or less, more preferably 8% by mass or less, further preferably 7% by mass or less in the asphalt mixture.
<17> The asphalt mixture according to any one of the above <1> to <16>, wherein the polyester resin (A) and the compound (B) are contained in a total amount of 1 part by mass and 30 parts by mass or less, preferably 3 parts by mass or more, more preferably 5 parts by mass or more, and preferably 25 parts by mass or less, more preferably 20 parts by mass or less relative to 100 parts by mass of the asphalt.
<18> The asphalt mixture according to any one of the above <1> to <17>, wherein the polyester resin (A) has a softening point or a melting point of 90°C or higher, more preferably 100°C or higher, and preferably 150°C or lower, more preferably 145°C or lower, further preferably 140°C or lower.
<19> The asphalt mixture according to any one of the above <1> to <18>, wherein the polyester resin (A) contains a structural unit derived from an alcohol component and a structural unit derived from a carboxylic acid component,
   the alcohol component being one or more selected from an aliphatic diol, an alicyclic diol, an aromatic diol, and a trihydric or higher polyhydric alcohol,
   the carboxylic acid component being one or more selected from an aliphatic dicarboxylic acid, an aromatic dicarboxylic acid, and a tribasic or higher and hexabasic or lower polybasic carboxylic acid.
<20> An asphalt modifier containing a polyester resin (A) and a compound (B) described below:
   the compound (B): a compound having 8 or more carbon atoms and having a hydroxy group or an amino group.
<21> The asphalt modifier according to the above <20>, wherein the compound (B) has 30 or less carbon atoms, preferably 10 or more, more preferably 12 or more, and preferably 25 or less, more preferably 20 or less carbon atoms.
<22> The asphalt modifier according to the above <20> or <21>, wherein the compound (B) is one or more compounds selected from an alkylamine, an alkyl alcohol, a sugar alcohol, and an alkylamide compound.
<23> The asphalt modifier according to any one of the above <20> to <22>, wherein the alkylamine contains one or more selected from the group consisting of
   a primary amine selected from the group consisting of octylamine, decylamine, laurylamine, myristylamine, palmitylamine, stearylamine, oleylamine, coconut amine, soya amine, tallow amine, and hydrogenated tallow amine;
   a secondary amine selected from the group consisting of dibutylamine, dioctylamine, didecylamine, dilaurylamine, dimyristylamine, dipalmitylamine, distearylamine, dioleylamine, dicoconut amine, disoya amine, ditallow amine, and di(hydrogenated tallow) amine;
   a tertiary amine selected from the group consisting of dimethyloctylamine, dimethyldecylamine, dimethyllaurylamine, dimethylmyristylamine, dimethylpalmitylamine, dimethylstearylamine, dimethyloleylamine, dimethylcoconut amine, dimethylsoya amine, dimethyltallow amine, and dimethyl(hydrogenated tallow) amine;
   one or more diamines selected from the group consisting of octyl propylenediamine, decylpropylenediamine, laurylpropylenediamine, myristylpropylenediamine, palmitylpropylenediamine, stearylpropylenediamine, oleylpropylenediamine, coconut propylenediamine, soya propylenediamine, tallow propylenediamine, and hydrogenated tallow propylenediamine; and
   one or more triamines selected from tallow dipropylenetriamine,
   preferably one or more selected from the group consisting of tallow amine, tallow triamine, and dimethyldecylamine, more preferably tallow amine.
<24> The asphalt modifier according to any one of the above <20> to <22>, wherein the alkyl alcohol contains
   one or more selected from the group consisting of octyl alcohol, decyl alcohol, lauryl alcohol, myristyl alcohol, cetyl alcohol, and stearyl alcohol,
   preferably lauryl alcohol.
<25> The asphalt modifier according to any one of the above <20> to <22>, wherein the sugar alcohol contains one or more selected from the group consisting of
   one or more sugar alcohols having two hydroxy groups selected from the group consisting of glycerol monostearate, glycerol monooleate, sorbitan distearate, and sorbitan dioleate; and one or more sugar alcohols having three hydroxy groups selected from the group consisting of sorbitan monolaurate, sorbitan monopalmitate, and sorbitan monostearate,
   preferably sorbitan monostearate.
<26> The asphalt modifier according to any one of the above <20> to <22>, wherein the alkylamide contains one or more selected from the group consisting of
   one or more alkylamides selected from the group consisting of ethylene bisstearic acid amide, stearic acid amide, and oleic acid amide; and one or more alkylalkanolamides selected from the group consisting of stearylethanolamide and laurylethanolamide,
   preferably ethylene bisstearic acid amide.
<27> The asphalt modifier according to any one of the above <20> to <26>, wherein a mass ratio of the polyester resin (A) to the compound (B) [polyester resin (A) / compound (B)] is 4 or more and 39 or less, preferably 5 or more, more preferably 6 or more, and preferably 30 or less, more preferably 25 or less.
<28> The asphalt modifier according to any one of the above <20> to <23>, wherein the compound (B) is an alkylamine,
   the mass ratio of the polyester resin (A) to the alkylamine [polyester resin (A) / alkylamine] being 4 or more and 39 or less, preferably 5 or more, more preferably 6 or more, and preferably 30 or less, more preferably 25 or less.
<29> The asphalt modifier according to any one of the above <20> to <22> and <24>, wherein the compound (B) is an alkyl alcohol,
   the mass ratio of the polyester resin (A) to the alkyl alcohol [polyester resin (A) / alkyl alcohol] being 4 or more and 39 or less, preferably 5 or more, more preferably 6 or more, and preferably 30 or less, more preferably 25 or less.
<30> The asphalt modifier according to any one of the above <20> to <23>, wherein the compound (B) is a sugar alcohol,
   the mass ratio of the polyester resin (A) to the sugar alcohol [polyester resin (A) / sugar alcohol] being 4 or more and 39 or less, preferably 5 or more, more preferably 6 or more, and preferably 30 or less, more preferably 25 or less.
<31> The asphalt modifier according to any one of the above <20> to <22> and <25>, wherein the compound (B) is an alkylamide compound,
   the mass ratio of the polyester resin (A) to the alkylamide compound [polyester resin (A) / alkylamide compound] being 4 or more and 39 or less, preferably 5 or more, more preferably 6 or more, and preferably 30 or less, more preferably 25 or less.
<32> The asphalt modifier according to any one of the above <20> to <31>, wherein the polyester resin (A) has a softening point or a melting point of 90°C or higher, more preferably 100°C or higher, and preferably 150°C or lower, more preferably 145°C or lower, further preferably 140°C or lower.
<33> A method for producing an asphalt mixture, the method including a step of adding to and mixing with a heated aggregate a mixture of an asphalt, a polyester resin (A), and a compound (B) described below that are previously mixed with heat:
   the compound (B): a compound having 8 or more carbon atoms and having a hydroxy group or an amino group.
<34> The method for producing an asphalt mixture according to the above <33>, wherein the asphalt, the polyester resin (A), and the compound (B) are mixed to the heated aggregate at a temperature of 130°C or higher and 200°C or lower.
<35> A method for paving a road, the method including a step of laying with compaction the asphalt mixture according to any one of the above <1> to <18>,
   the compaction of the asphalt mixture being performed at a temperature of 100°C or higher and 200°C or lower.
<36> Use of an additive in a recycled asphalt mixture that contains an asphalt recycled aggregate as an aggregate, the additive containing one or more compounds having 8 or more carbon atoms selected from an alkylamine, an alkyl alcohol, a sugar alcohol, and an alkylamide compound.

### Examples

Property values of resins and the like were measured and evaluated by the following methods.

### [Measurement Method]

### (1) Softening Point

Using a flow tester "CFT-500D" (manufactured by Shimadzu Corporation), while heating 1 g of a sample at a temperature rise rate of 6°C/min, the sample was extruded through a nozzle having a diameter of 1 mm and a length of 1 mm with a load of 1.96 MPa applied by a plunger. The amount of descent of the plunger of the flow tester was plotted versus the temperature, and a temperature at which the half amount of the sample flowed out was taken as the softening point of the sample.

### Production Example 1 (Polyester Resin A1)

The alcohol component and the terephthalic acid among the raw material monomers shown in Table 1 were put in a 10-liter four-neck flask equipped with a thermometer, a stainless-steel stirrer bar, a dewatering conduit, a flow-down condenser, and a nitrogen introducing tube, and tin(II) di(2-ethylhexanoate) and gallic acid were added thereto in amounts shown in Table 1 under nitrogen atmosphere. The mixture was heated to 235°C over 3 hours in a mantle heater, was kept at 235°C for 5 hours, and then, was subjected to a reaction under reduced pressure at 8.0 kPa for 1 hour. After cooling the mixture to 180°C, an alkenylsuccinic acid anhydride was put thereinto. The temperature was increased to 210°C over 2 hours, then was kept at 210°C for 1 hour. A reaction under reduced pressure was performed at 8.3 kPa and then, a reaction was performed until the softening point shown in Table 1 was reached, whereby a polyester resin A1 was obtained.

### Production Example 2 (Polyester Resin A2)

The alcohol component, terephthalic acid, and PET (polyethylene terephthalate) among the raw material monomers shown in Table 1 were put in a 10-liter four-neck flask equipped with a thermometer, a stainless-steel stirrer bar, a dewatering conduit, a flow-down condenser, and a nitrogen introducing tube, and tin(II) di(2-ethylhexanoate) was added thereto in an amount shown in Table 1 under nitrogen atmosphere. The mixture was heated to 235°C over 3 hours in a mantle heater, was kept at 235°C for 5 hours, and then, was subjected to a reaction under reduced pressure at 8.0 kPa for 1 hour. After visually confirming disappearance of PET granules from the reaction product, the reaction mixture was cooled to 180°C, and an alkenylsuccinic acid anhydride was put thereinto. The temperature was increased to 210°C over 2 hours and was then kept at 210°C for 1 hour. A reaction under reduced pressure was performed at 8.3 kPa and then, a reaction was performed until the softening point shown in Table 1 was reached, whereby a polyester resin A2 was obtained.

### Production Example 3 (Polyester Resin A3)

The raw material monomers shown in Table 1 were put in a 10-liter four-neck flask equipped with a thermometer, a stainless-steel stirrer bar, a dewatering conduit, a nitrogen introducing tube, and a thermocouple, and tin(II) di(2-ethylhexanoate) and gallic acid were added thereto. The mixture was kept at 180°C for 2 hours under nitrogen atmosphere, and was further heated to 210°C over 3 hours. A reaction was performed at 210°C for 4 hours, followed by a reaction under reduced pressure at 8.3kPa for 1 hour, whereby a polyester resin A3 was obtained.

### Production Example 4 (Polyester Resin A4)

The raw material monomers shown in Table 1 were put in a 10-liter four-neck flask equipped with a thermometer, a stainless-steel stirrer bar, a dewatering conduit, a nitrogen introducing tube, and a thermocouple. The mixture was kept at 140°C for 6 hours under nitrogen atmosphere, and was further heated to 200°C over 6 hours, and then, tin(II) di(2-ethylhexanoate) and gallic acid were added thereto. A reaction was performed at 200°C for 1 hour, followed by a reaction under reduced pressure at 8.3kPa for 1 hour, whereby a polyester resin A4 was obtained.

**Table 1**

| | | | Production Example | | | | | | | |
|---|---|---|---|---|---|---|---|---|---|---|
| | | | 1 | | 2 | | 3 | | 4 | |
| Kind of polyester resin | | | A1 | | A2 | | A3 | | A4 | |
| Raw material monomer | Monomer composition | | Charged amount (g) | Molar ratio *1 | Charged amount (g) | Molar ratio *1 | Charged amount (g) | Molar ratio *1 | Charged amount (g) | Molar ratio *1 |
| | Alcohol component | Ethylene glycol | | | | 60 | | | | |
| | | 1,6-Hexanediol | | | | | 2950 | 100 | 2622 | 100 |
| | | BPA-EO Adduct *2 | 6500 | 100 | | | | | | |
| | | BPA-PO Adduct *3 | | | 5600 | 40 | | | | |
| | Carboxylic acid component | Sebacic acid | | | | | | | 4713 | 105 |
| | | Terephthalic acid | 2656 | 80 | 1660 | 85 | 3735 | 90 | | |
| | | Alkenylsuccinic acid anhydride *4 | 1072 | 20 | 1072 | 10 | | | | |
| PET | | RAMAPET L1 *5 | | | 4608 | | | | | |
| | | | Charged amount (g) | | Charged amount (g) | | Charged amount (g) | | Charged amount (g) | |
| Esterification catalyst | Tin(ii) di(2-ethylhexanoate) | | 51.1 | | 64.7 | | 33.4 | | 36.7 | |
| Promotor | Gallic acid | | 5.1 | | 0 | | 3.3 | | 3.7 | |
| Property | Softening point (Ts, °C) | | 106.8 | | 108.8 | | 138.2 | | 76.5 | |

| | | | | | | | | | | |
|---|---|---|---|---|---|---|---|---|---|---|
| *1: Molar ratios of alcohol component and PET component relative to 100 moles of polyethylene glycol unit provided that the molar ratio of ethylene glycol contains the molar ratio of the ethylene glycol unit derived from the PET component, the molar ratio of terephthalic acid contains the molar ratio of the terephthalic acid unit derived from the PET component. *2: BPA-EO Adduct: polyoxyethylene (2.2 mol) adduct of bisphenol A *3: BPA-PO Adduct: polyoxypropylene (2.2 mol) adduct of bisphenol A *4: Alkenylsuccinic acid anhydride: a mixture of succinic acid anhydrides having an alkenyl group, the average number of carbon atoms of the alkenyl groups: 12 *5: RAMAPET L1: polyethylene terephthalate, manufactured by Indorama Ventures | | | | | | | | | | |

### Example 1

In an asphalt mixer, 12 kg of an aggregate (formulation A; see the following description about the composition of the aggregate) heated to 180°C was put, and was mixed at 180°C for 60 seconds. Subsequently, 540 g of a straight asphalt (manufactured by Idemitsu Kosan Co., Ltd.) was added thereto and the mixture was mixed for 1 minute with the asphalt mixer. Subsequently, 146 g of the polyester resin A1 and 7.7 g of the compound B1 ("DANOX A-P"; tallow amine mixture, manufactured by KAO CORPORATION) were added thereto, and the mixture was mixed with the asphalt mixer for 2 minutes, whereby an asphalt mixture M-1 was obtained.

The "DANOX A-P" is a mixture of various amines and amidation products (main component: tallow amine) obtained as a residue in a step of purifying tallow amine.

### (1) Production of Asphalt Specimen T1 for Wheel Tracking Test

A mold of 300 × 300 × 50 mm was quickly filled with the obtained asphalt mixture M-1, and after curing with heat at 180°C for 2 hours, using a roller compactor (manufactured by Iwata Kogyosho KK), a pressure treatment of 25 rotations was applied at a temperature of 150°C and a load of 0.44 kPa, whereby an asphalt specimen T1-1 was produced.

### (2) Production of Asphalt Specimen T2 for Marshall Stability Test

Of the obtained asphalt mixture M-1, 1.2 kg was weighed, and was subjected to curing with heat by storing at 180°C for 2 hours. Using a Marshall test compactor "Asphalt Automatic Compactor" (manufactured by Nakajima Technology Inc.), 100 compactions were applied with 50 compactions for each face, whereby an asphalt specimen T2-1 for Marshall stability test having a cylindrical shape was produced.

The asphalt mixture contains an a newly blended straight asphalt and an asphalt derived from an asphalt recycled aggregate as the asphalt.

The content of the polyester resin A1 in the asphalt mixture was 19 parts by mass relative to 100 parts by mass of the total content of the asphalts, and the content of the compound B1 was 1 part by mass.

### <Composition of Aggregate >

### [Formulation A]

| | |
|---|---|
| Crushed stones No. 6 | 31.0 parts by mass |
| Crushed sand | 6.0 parts by mass |
| River sand | 13.0 parts by mass |
| Mountain sand | 6.0 parts by mass |
| Stone dust (calcium carbonate powder) | 4.0 parts by mass |
| Asphalt recycled aggregate | 40.0 parts by mass (asphalt content: 4.7% by mass (estimated value)) |

### Passing % by mass:

| | |
|---|---|
| Sieve opening 15 mm: | 100 % by mass |
| Sieve opening 10 mm: | 87.9% by mass |
| Sieve opening 5 mm: | 57.5% by mass |
| Sieve opening 2.5 mm: | 53.1% by mass |
| Sieve opening 1.2 mm: | 36.7% by mass |
| Sieve opening 0.6 mm: | 23.1% by mass |
| Sieve opening 0.3 mm: | 12.7% by mass |
| Sieve opening 0.15 mm: | 6.5% by mass |

The content of the asphalt in the asphalt recycled aggregate was determined according to the method defined in AASHTO T 308-10 (2015).

### Examples 2 to 3

Asphalt specimens T1-2 to T1-3 for wheel tracking test were produced in the same manner as in Example 1 except for changing the amount of the compound B1 added as shown in Table 2.

### Examples 4 to 8

Asphalt specimens T1-4 to T1-8 for wheel tracking test were produced in the same manner as in Example 1 except for changing the compound B1 to compounds B2 to B6 shown in Table 2.

### Examples 9 to 11

Asphalt specimens T1-9 to T1-11 for wheel tracking test were produced in the same manner as in Example 1 except for changing the polyester resin A1 to the polyester resins A2 to A4 obtained in Production Examples 2 to 4 shown Table 2.

### Example 12

An asphalt specimen T1-12 for wheel tracking test was produced in the same manner as in Example 1 except for not adding the polyester resin A1.

### Comparative Example 1

An asphalt specimen T1-C1 for wheel tracking test was produced in the same manner as in Example 1 except for not adding the polyester resin A1 and the compound B1.

### Comparative Example 2

An asphalt specimen T1-C2 for wheel tracking test and an asphalt specimen T2-C2 for Marshall stability test were produced in the same manner as in Example 1 except for not adding the compound B1.

### Comparative Examples 3 to 5

Asphalt specimens T1-C3 to T1-C5 for wheel tracking test were produced in the same manner as in Example 1 except for changing the compound B1 to the compounds C1 to C3 shown in Table 2.

The compounds B2 to B6 and C1 to C3 used in Examples were as follows.
Compound B2: "ASFIER N480L"; tallow triamine (manufactured by KAO CORPORATION)
Compound B3: "KAOWAX EB-G"; ethylene bisstearic acid amide (manufactured by KAO CORPORATION)
Compound B4: "RHEODOL SP-S10V"; sorbitan monostearate (manufactured by KAO CORPORATION)
Compound B5: "KALCOL 2098"; lauryl alcohol (manufactured by KAO CORPORATION)
Compound B6: "FARMIN DM1098"; dimethyldecylamine (manufactured by KAO CORPORATION)
Compound C1: γ-amino butyric acid
Compound C2: n-heptanol
Compound C3: "GRIPPER 4131"; mixture of stearyl phosphate and phosphoric acid (manufactured by KAO CORPORATION)

### [Evaluation (1)]

The asphalt specimens T1-1 to T1-12 and T1-C1 to T1-C5 for wheel tracking test obtained in Examples 1 to 12 and Comparative Examples 1 to 5 were subjected to the following evaluation tests.

### <Evaluation of Durability: Rutting Amount (Wheel Tracking Test)>

An asphalt specimen was immersed in hot water set to 65°C in a 60°C thermostatic chamber, and using a wheel tracking tester (manufactured by Iwata Kogyosho K. K., load: 686N, width of iron wheel: 47 mm, line load: 291.5 N/cm), the wheel was reciprocated on the specimen at a rate of 21 reciprocations/minute and the displacement was measured at passing of 2,000 reciprocations. The other measurement conditions were according to the "B003 wheel tracking test" described in "Handbook for Assessment and Testing Method of Pavement" published from JAPAN ROAD ASSOCIATION.

The results are shown in Table 2.

### <Evaluation of Black Color of Pavement>

In an asphalt specimen before subjected to a wheel tracking test, using a portable color-difference meter (TES-3250, manufactured by SATO SHOJI CORPORATION), the L* values in the L*a*b* color system were measured at randomly chosen four points. The average thereof was taken as the measurement value before test.

In the asphalt specimen after a wheel tracking test, the L* values were similarly measured at four points randomly selected from the part subjected to the wheel running. The average thereof was taken as the measurement value after test.

As a measure of the variation in the L* value between before and after the wheel tracking test, the [measurement value before test / measurement value after test] was calculated.

The results are shown in Table 2.

The L* value in the L*a*b* color system is a value indicating the brightness in the range of 0 or more and 100 or less. A smaller value means a stronger black color and a larger value means a stronger white color. From the viewpoint of the surface aesthetics and visibility, a stronger black color, that is, a smaller value is preferred.

A [measurement value before test / measurement value after test] closer to 1.0 means a higher capability of maintaining the black color.

The asphalt specimen before subjected to the wheel tracking test corresponds to an asphalt pavement body immediately after a pressure treatment, and the asphalt specimen after the wheel tracking test corresponds to an asphalt pavement body that has been degraded over year after the traffic opening.

**Table 2**

| | | Polyester (A) | | Compound (B) | | Durability | Black color of pavement | | |
|---|---|---|---|---|---|---|---|---|---|
| | | Kind | Added amount *1 | Kind | Added amount *1 | Rutting amount (mm) | Before test | After test | Variation *2 |
| | 1 | A1 | 19 | B1 | 1 | 0.8 | 16.9 | 17.4 | 0.971 |
| | 2 | A1 | 19.5 | B1 | 0.5 | 0.9 | 16.8 | 19.3 | 0.870 |
| | 3 | A1 | 18 | B1 | 2 | 1.4 | 16.3 | 17.9 | 0.911 |
| | 4 | A1 | 19 | B2 | 1 | 1.0 | 17.4 | 18.2 | 0.956 |
| | 5 | A1 | 19 | B3 | 1 | 1.1 | 16.7 | 17.7 | 0.944 |
| Example | 6 | A1 | 19 | B4 | 1 | 0.9 | 17.8 | 18.5 | 0.962 |
| | 7 | A1 | 19 | B5 | 1 | 1.2 | 17.1 | 18.6 | 0.919 |
| | 8 | A1 | 19 | B6 | 1 | 1.4 | 17.4 | 19 | 0.916 |
| | 9 | A2 | 19 | B1 | 1 | 1.0 | 16.4 | 17.1 | 0.959 |
| | 10 | A3 | 19 | B1 | 1 | 1.1 | 17.4 | 18.3 | 0.951 |
| | 11 | A4 | 19 | B1 | 1 | 1.3 | 17.8 | 19.2 | 0.927 |
| | 12 | | | B1 | 1 | 6.7 | 16.3 | 20.9 | 0.780 |
| Comparative Example | 1 | | | | | 4.2 | 16.9 | 27.4 | 0.617 |
| | 2 | A1 | 19 | | | 1.8 | 22.3 | 22.9 | 0.974 |
| | 3 | A1 | 19 | C1 | 1 | 4.5 | 18.4 | 25.1 | 0.733 |
| | 4 | A1 | 19 | C2 | 1 | 4.7 | 17.2 | 24.3 | 0.708 |
| | 5 | A1 | 19 | C3 | 1 | 5.4 | 17.8 | 25.4 | 0.701 |

| | | | | | | | | | |
|---|---|---|---|---|---|---|---|---|---|
| * 1: Content relative to 100 parts by mass of the total amount of the asphalt (parts by mass) *2: Variation = [measurement value before test] / [measurement value after test] | | | | | | | | | |

As is seen from the results shown in Table 2, an asphalt modifier that contains the polyester resin (A) and the prescribed compound (B) is capable of providing an asphalt pavement that has a superior durability and that can maintain the black color even after the traffic opening even when the aggregate contains an asphalt recycled aggregate (for example, Examples 1 to 11). It can be seen that an asphalt modifier that does not contain the polyester resin (A) and contains the prescribed compound (B) also provides such effects (for example, Example 12).

### [Evaluation (2)]

The asphalt specimens T2-1 and T2-C2 for Marshall stability test obtained in Example 1 and Comparative Example 2 were subjected to the following evaluation test.

### <Marshall stability test>

The asphalt specimen T2 released from the mold was immersed in a thermobath at 60°C for 30 minutes, and then, using a Marshall loading device (manufactured by Nakajima Technology Inc.), the asphalt specimen T2 rolled over was crushed with plates at a rate of 50 mm/minute. The maximum load until the specimen was broken was taken as the Marshall stability. The amount of displacement from the starting point of the slope of the displacement to the maximum load was measured and taken as the flow value. The other measurement conditions were according to the "B001 Marshall stability test" described in the "Handbook for Assessment and Testing Method of Pavement" published from JAPAN ROAD ASSOCIATION.

The flow value of the asphalt specimen T2-1 (Example 1) was 30 [1/100 cm], and the flow value of the asphalt specimen T2-C2 (Comparative Example 2) was 18 [1/100 cm].

The flow value in the Marshall stability test was a measure of the flexibility and the cracking resistance at a using temperature of asphalt pavement, and as the flow value is larger, the asphalt pavement is more superior in the flexibility and the cracking resistance.

It can be seen from the above results that an asphalt specimen obtained by using an asphalt modifier that contains the polyester resin (A) and the prescribed compound (B) is more superior in the flexibility and the cracking resistance as compared with an asphalt specimen that does not contain the compound (B) (for example, comparison between Example 1 and Comparative Example 2).

## Claims

1. An asphalt mixture comprising a polyester resin (A), a compound (B) described below, an asphalt, and an aggregate,
the aggregate containing an asphalt recycled aggregate:
the compound (B): a compound having 8 or more carbon atoms and having a hydroxy group or an amino group.

2. The asphalt mixture according to claim 1, wherein the compound (B) has 30 or less carbon atoms.

3. The asphalt mixture according to claim 1 or 2, wherein the compound (B) is one or more compounds selected from an alkylamine, an alkyl alcohol, a sugar alcohol, and an alkylamide compound.

4. The asphalt mixture according to any one of claims 1 to 3, which has a mass ratio of the polyester resin (A) to the compound (B) [polyester resin (A) / compound (B)] of 4 or more and 39 or less.

5. The asphalt mixture according to any one of claims 1 to 4, wherein the asphalt mixture contains the aggregate in an amount of 90% by mass or more and 98% by mass or less.

6. The asphalt mixture according to any one of claims 1 to 5, wherein the asphalt mixture contains the asphalt recycled aggregate in an amount of 10% by mass or more and 80% by mass or less.

7. The asphalt mixture according to any one of claims 1 to 6, wherein the asphalt mixture contains the polyester resin (A) and the compound (B) in a total amount of 0.01% by mass or more and 4% by mass or less.

8. The asphalt mixture according to any one of claims 1 to 7, wherein the asphalt mixture contains the asphalt in an amount of 2.5% by mass or more and 10% by mass or less.

9. The asphalt mixture according to any one of claims 1 to 8, wherein the polyester resin (A) and the compound (B) are contained in a total amount of 1 part by mass and 30 parts by mass or less relative to 100 parts by mass of the asphalt.

10. The asphalt mixture according to any one of claims 1 to 9, wherein the polyester resin (A) has a softening point or a melting point of 90°C or higher.

11. The asphalt mixture according to any one of claims 1 to 10, wherein the polyester resin (A) comprises a structural unit derived from an alcohol component and a structural unit derived from a carboxylic acid component,
the alcohol component being one or more selected from an aliphatic diol, an alicyclic diol, an aromatic diol, and a trihydric or higher polyhydric alcohol,
the carboxylic acid component being one or more selected from an aliphatic dicarboxylic acid, an aromatic dicarboxylic acid, and a tribasic or higher and hexabasic or lower polybasic carboxylic acid.

12. An asphalt modifier comprising a polyester resin (A) and a compound (B) described below:
the compound (B): a compound having 8 or more carbon atoms and having a hydroxy group or an amino group.

13. A method for producing an asphalt mixture, the method comprising a step of adding to and mixing with a heated aggregate a mixture of an asphalt, a polyester resin (A), and a compound (B) described below that are previously mixed with heat:
the compound (B): a compound having 8 or more carbon atoms and having a hydroxy group or an amino group.

14. The method for producing an asphalt mixture according to claim 13, wherein the asphalt, the polyester resin (A), and the compound (B) are mixed with the heated aggregate at a temperature of 130°C or higher and 200°C or lower.

15. A method for paving a road, the method comprising a step of laying with compaction the asphalt mixture according to any one of claim 1 to 11,
the compaction of the asphalt mixture being performed at a temperature of 100°C or higher and 200°C or lower.

16. Use of an additive in a recycled asphalt mixture that contains an asphalt recycled aggregate as an aggregate, the additive comprising one or more compounds having 8 or more carbon atoms selected from an alkylamine, an alkyl alcohol, a sugar alcohol, and an alkylamide compound.

## Patentansprüche

1. Asphaltmischung, umfassend ein Polyesterharz (A), eine nachstehend beschriebene Verbindung (B), einen Asphalt und ein Aggregat,
wobei das Aggregat ein recyceltes Asphaltaggregat enthält:
die Verbindung (B): eine Verbindung mit 8 oder mehr Kohlenstoffatomen und einer Hydroxylgruppe oder einer Aminogruppe.

2. Asphaltmischung gemäß Anspruch 1, wobei die Verbindung (B) 30 oder weniger Kohlenstoffatome aufweist.

3. Asphaltmischung gemäß Anspruch 1 oder 2, wobei die Verbindung (B) eine oder mehrere Verbindungen ist, ausgewählt aus einem Alkylamin, einem Alkylalkohol, einem Zuckeralkohol und einer Alkylamidverbindung.

4. Asphaltmischung gemäß mindestens einem der Ansprüche 1 bis 3, die ein Massenverhältnis des Polyesterharzes (A) zur Verbindung (B) [Polyesterharz (A) / Verbindung (B)] von 4 oder mehr und 39 oder weniger aufweist.

5. Asphaltmischung gemäß mindestens einem der Ansprüche 1 bis 4, wobei die Asphaltmischung das Aggregat in einer Menge von 90 Massen-% oder mehr und 98 Massen-% oder weniger enthält.

6. Asphaltmischung gemäß mindestens einem der Ansprüche 1 bis 5, wobei die Asphaltmischung das recycelte Asphaltaggregat in einer Menge von 10 Massen-% oder mehr und 80 Massen-% oder weniger enthält.

7. Asphaltmischung gemäß mindestens einem der Ansprüche 1 bis 6, wobei die Asphaltmischung das Polyesterharz (A) und die Verbindung (B) in einer Gesamtmenge von 0,01 Massen-% oder mehr und 4 Massen-% oder weniger enthält.

8. Asphaltmischung gemäß mindestens einem der Ansprüche 1 bis 7, wobei die Asphaltmischung den Asphalt in einer Menge von 2,5 Massen-% oder mehr und 10 Massen-% oder weniger enthält.

9. Asphaltmischung gemäß mindestens einem der Ansprüche 1 bis 8, wobei das Polyesterharz (A) und die Verbindung (B) in einer Gesamtmenge von 1 Masseteil und 30 Masseteilen oder weniger, bezogen auf 100 Masseteile des Asphalts, enthalten sind.

10. Asphaltmischung gemäß mindestens einem der Ansprüche 1 bis 9, wobei das Polyesterharz (A) einen Erweichungspunkt oder einen Schmelzpunkt von 90°C oder höher aufweist.

11. Asphaltmischung gemäß mindestens einem der Ansprüche 1 bis 10, wobei das Polyesterharz (A) eine von einer Alkoholkomponente abgeleitete Struktureinheit und eine von einer Carbonsäurekomponente abgeleitete Struktureinheit umfasst,
wobei die Alkoholkomponente eine oder mehrere ist, ausgewählt aus einem aliphatischen Diol, einem alicyclischen Diol, einem aromatischen Diol und einem dreiwertigen oder höheren mehrwertigen Alkohol,
wobei die Carbonsäurekomponente eine oder mehrere ist, ausgewählt aus einer aliphatischen Dicarbonsäure, einer aromatischen Dicarbonsäure und einer tribasischen oder höheren und hexabasischen oder niedrigeren mehrbasischen Carbonsäure.

12. Asphaltmodifikator, umfassend ein Polyesterharz (A) und eine nachstehend beschriebene Verbindung (B):
die Verbindung (B): eine Verbindung mit 8 oder mehr Kohlenstoffatomen und einer Hydroxygruppe oder einer Aminogruppe.

13. Verfahren zur Herstellung einer Asphaltmischung, wobei das Verfahren einen Schritt des Hinzufügens und Vermischens einer Mischung aus einem Asphalt, einem Polyesterharz (A) und einer nachstehend beschriebenen Verbindung (B), die zuvor unter Erhitzen gemischt wurden, zu einem erhitzten Aggregat umfasst:
die Verbindung (B): eine Verbindung mit 8 oder mehr Kohlenstoffatomen und einer Hydroxygruppe oder einer Aminogruppe.

14. Verfahren zur Herstellung einer Asphaltmischung gemäß Anspruch 13, bei dem der Asphalt, das Polyesterharz (A) und die Verbindung (B) mit dem erhitzten Aggregat bei einer Temperatur von 130°C oder höher und 200°C oder niedriger gemischt werden.

15. Verfahren zum Belegen einer Straße, wobei das Verfahren einen Schritt des Verlegens und Verdichtens der Asphaltmischung gemäß mindestens einem der Ansprüche 1 bis 11 umfasst,
wobei die Verdichtung der Asphaltmischung bei einer Temperatur von 100°C oder höher und 200°C oder niedriger durchgeführt wird.

16. Verwendung eines Additivs in einer recycelten Asphaltmischung, die ein recyceltes Asphaltaggregat als ein Aggregat enthält, wobei das Additiv eine oder mehrere Verbindungen mit 8 oder mehr Kohlenstoffatomen umfasst, ausgewählt aus einem Alkylamin, einem Alkylalkohol, einem Zuckeralkohol und einer Alkylamidverbindung.

## Revendications

1. Mélange d'asphalte comprenant une résine de polyester (A), un composé (B) décrit ci-dessous, un asphalte et un agrégat, l'agrégat contenant un agrégat recyclé d'asphalte :
le composé (B) : un composé présentant 8 atomes de carbone ou plus et présentant un groupe hydroxy ou un groupe amino.

2. Mélange d'asphalte selon la revendication 1, dans lequel le composé (B) présente 30 atomes de carbone ou moins.

3. Mélange d'asphalte selon la revendication 1 ou revendication 2, dans lequel le composé (B) est un ou plusieurs composés sélectionnés parmi un alkylamine, un alcool d'alkyle, un alcool de sucre et un composé d'alkylamide.

4. Mélange d'asphalte selon l'une des revendications 1 à 3, qui présente un rapport massique de la résine de polyester (A) sur le composé (B) [résine de polyester (A) / composé (B)] de 4 ou plus et de 39 ou moins.

5. Mélange d'asphalte selon l'une des revendications 1 à 4, dans lequel le mélange d'asphalte contient l'agrégat en une quantité de 90 % en masse ou plus et de 98 % en masse ou moins.

6. Mélange d'asphalte selon l'une des revendications 1 à 5, dans lequel le mélange d'asphalte contient l'agrégat recyclé d'asphalte en une quantité de 10 % en masse ou plus et de 80 % en masse ou moins.

7. Mélange d'asphalte selon l'une des revendications 1 à 6, dans lequel le mélange d'asphalte contient la résine de polyester (A) et le composé (B) en une quantité totale de 0,01 % en masse ou plus et de 4 % en masse ou moins.

8. Mélange d'asphalte selon l'une des revendications 1 à 7, dans lequel le mélange d'asphalte contient l'asphalte en une quantité de 2,5 % en masse ou plus et de 10 % en masse ou moins.

9. Mélange d'asphalte selon l'une des revendications 1 à 8, dans lequel la résine de polyester (A) et le composé (B) sont contenus en une quantité totale de 1 part en masse et de 30 parts en masse ou moins par rapport à 100 parts en masse de l'asphalte.

10. Mélange d'asphalte selon l'une des revendications 1 à 9, dans lequel la résine de polyester (A) présente un point de ramollissement ou un point de fusion de 90 °C ou plus.

11. Mélange d'asphalte selon l'une des revendications 1 à 10, dans lequel la résine de polyester (A) comprend un motif structural dérivé d'un composant d'alcool et un motif structural dérivé d'un composant d'acide carboxylique,
le composant d'alcool étant un ou plusieurs sélectionnés parmi un diol aliphatique, un diol alicyclique, un diol aromatique et un alcool trihydrique ou polyhydrique plus élevé,
le composant d'acide carboxylique étant un ou plusieurs sélectionnés parmi un acide dicarboxylique aliphatique, un acide dicarboxylique aromatique et un acide dicarboxylique polybasique tribasique ou plus élevé et hexabasique ou moins élevé.

12. Modificateur d'asphalte comprenant une résine de polyester (A) et un composé (B) décrits ci-dessous :
le composé (B) : un composé présentant 8 atomes de carbone ou plus et présentant un groupe hydroxy ou un groupe amino.

13. Procédé de production d'un mélange d'asphalte, le procédé comprenant une étape consistant à ajouter à un agrégat chauffé et à mélanger à ce dernier un mélange d'asphalte, d'une résine de polyester (A) et d'un composé (B) décrit ci-dessous qui sont préalablement mélangés à la chaleur :
le composé (B) : un composé présentant 8 atomes de carbone ou plus et présentant un groupe hydroxy ou un groupe amino.

14. Procédé de production d'un mélange d'asphalte selon la revendication 13, dans lequel l'asphalte, la résine de polyester (A) et le composé (B) sont mélangés avec l'agrégat chauffé à une température de 130 °C ou plus et de 200 °C ou moins.

15. Procédé de pavement d'une route, le procédé comprenant l'étape consistant à disposer avec compactage le mélange d'asphalte selon l'une quelconque des revendications 1 à 11,
le compactage du mélange d'asphalte étant mis en œuvre à une température de 100 °C ou plus et de 200 °C ou moins.

16. Utilisation d'un additif dans un mélange d'asphalte recyclé qui contient un agrégat recyclé d'asphalte en tant qu'agrégat, l'additif comprenant un ou plusieurs composés présentant 8 atomes de carbone ou plus sélectionnés parmi un alkylamine, un alcool d'alkyle, un alcool de sucre et un composé d'alkylamide.
